# EUROPÄISCHE PATENTANMELDUNG

(11) **EP 3 907 865 A1**
(43) Veröffentlichungstag der Anmeldung: **10.11.2021**
(21) Anmeldenummer: 20173624.6
(22) Anmeldetag: 08.05.2020
(51) Int. Cl.: H02K 15/03, H02K 15/12, H02K 1/27

(54) **VERFAHREN UND ANORDNUNG ZUM HERSTELLEN EINER KOMPONENTE EINER ELEKTRISCHEN MASCHINE**

(71) Anmelder: Sonplas GmbH, 94315 Straubing (DE)
(72) Erfinder: STÖBIG, Josef, 94431 Pilsting (DE); SCHMUCKER, Mario, 84130 Dingolfing (DE)
(74) Vertreter: Wunderlich & Heim Patentanwälte Partnerschaftsgesellschaft mbB

(57) **Zusammenfassung**

Die Erfindung betrifft ein Verfahren und eine Anordnung zum Herstellen einer Komponente einer elektrischen Maschine, wobei die Komponente ein Blechpaket, welches aus einer Vielzahl von Blechlamellen gebildet wird, und mindestens ein Magnetelement aufweist, welches in einer Aufnahmetasche des Blechpakets eingesetzt und darin befestigt wird. Gemäß der Erfindung ist vorgesehen, dass in die Aufnahmetasche mittels eines Prägestempels eine Einprägung zumindest in eine außenliegende Blechlamelle nahe der Aufnahmetasche eingeformt wird, wobei Material der Blechlamelle in den Bereich der Aufnahmetasche verdrängt und hierdurch das Magnetelement in der Aufnahmetasche in einem ersten Befestigungsschritt in seiner Lage fixiert wird, und dass anschließend ein zweiter Befestigungsschritt durchgeführt wird, mit dem das fixierte Magnetelement dauerhaft in der Aufnahmetasche befestigt wird.

## Beschreibung

Die Erfindung betrifft ein Verfahren zum Herstellen einer Komponente einer elektrischen Maschine, wobei die Komponente ein Blechpaket, welches aus einer Vielzahl von Blechlamellen gebildet wird, und mindestens ein Magnetelement aufweist, welches in einer Aufnahmetasche des Blechpaktes eingesetzt und darin befestigt wird, gemäß dem Oberbegriff des Anspruchs 1.

Weiterhin betrifft die Erfindung eine Anordnung zum Herstellen einer Komponente einer elektrischen Maschine, wobei die Komponente ein Blechpaket, welches aus einer Vielzahl von Blechlamellen gebildet ist, und mindestens ein Magnetelement aufweist, welches in einer Aufnahmetasche des Blechpakets eingesetzt und darin befestigt ist, gemäß dem Oberbegriff des Anspruchs 11.

Es ist bekannt, dass Blechpakete aus einer Vielzahl metallischer Bleche oder Blechlamellen vorteilhafte elektromagnetisch Eigenschaften haben, welche bei Komponenten von elektrischen Maschinen gewünscht sind.

Ein gattungsgemäßes Verfahren geht beispielsweise aus der DE 10 2008 043 138 A1 hervor. Zur Lagesicherung von Magneten in einem Lamellenpaket eines Rotors einer elektrischen Maschine werden außenliegende Blechlamellen mit vorstehenden Laschen angeordnet. Die Laschen werden in den Aufnahmetaschen umgebogen, so dass sie als Federelemente zum kraftschlüssigen Fixieren von eingesetzten Magnetelementen dienen können.

Ein ähnliches Verfahren geht aus der DE 10 2016 218 540 A1 hervor. An einem Rotor eines elektrischen Antriebsmotors werden an einzelnen Blechlamellen spezielle Zungen vorgesehen, welche in Kanäle in dem Blechpaket hineinragen und hierin eingeschobene Permanentmagnete in den Taschen fixieren können.

Aus der DE 10 2014 019 218 A1 geht ein Blechpaket für eine elektrische Maschine hervor, bei welchem in eine Aufnahmetasche des Blechpakets ragende Erhebungen ausgebildet werden, durch welche ein gezieltes Verkippen des Magnetelementes bewirkt wird.

Das Ausbilden spezieller einzelner Blechlamellen mit vorstehenden Laschen oder Zungen ist grundsätzlich aufwändig, da für diese Blechlamellen ein gesonderter Herstellungsschritt und auch ein besonderes Herstellungswerkzeug benötigt werden. Zudem muss bei der Zusammenstellung des Blechpaketes mit besonderer Sorgfalt vorgegangen werden, damit die Blechlamellen mit den vorstehenden Zungen in dem Lamellenpaket angeordnet sind.

Weiterhin ist es bekannt, die Magnetelemente in einem Blechlamellenpaket durch Verkleben zu befestigen. So geht beispielsweise aus der DE 103 49 442 A1 ein Verfahren hervor, bei welchem die Magnetelemente vor ihrem Einsetzen in die Aufnahmetaschen mit einer Backlackschicht überzogen werden. Nach dem Einsetzen wird das Lamellenpaket erhitzt, wobei die Backlackschicht aufgeweicht und eine stoffschlüssige Verbindung zu den umgebenden Blechlamellen hergestellt wird.

Bei einem Verkleben ist grundsätzlich nachteilig, dass der Klebeprozess mit einem gewissen Zeitaufwand verbunden ist, bis eine Aushärtung des Klebemediums erreicht ist. Dies kann insbesondere dann nachteilig sein, wenn in einer Aufnahmetasche mehrere Magnetelemente einzusetzen sind, welche sich von ihrer Magnetisierung her abstoßen. In einem solchen Fall sind die Magnetelemente durch eine Spanneinrichtung so lange zu halten, bis eine ausreichende Aushärtung des Klebemediums erreicht ist.

Der Erfindung liegt die **Aufgabe** zugrunde, ein Verfahren und eine Anordnung zum Herstellen einer Komponente einer elektrischen Maschine anzugehen, wobei mindestens ein Magnetelement in einer Aufnahmetasche eines Blechpaketes besonders wirtschaftlich und zuverlässig befestigt werden kann.

Die Aufgabe wird zum einen durch ein Verfahren mit den Merkmalen des Anspruchs 1 und zum anderen mit einer Anordnung mit den Merkmalen des Anspruchs 11 gelöst. Bevorzugte Ausführungsformen der Erfindung sind in den jeweils abhängigen Ansprüchen angegeben.

Das erfindungsgemäße Verfahren ist dadurch gekennzeichnet, dass in die Aufnahmetasche mittels eines Prägestempels eine Einprägung zumindest in eine außenliegende Blechlamelle nahe der Aufnahmetasche eingeformt wird, wobei Material der Blechlamelle in den Bereich der Aufnahmetasche verdrängt und so das Magnetelement in der Aufnahmetasche in einem ersten Befestigungsschritt in seiner Lage fixiert wird, und dass anschließend ein zweiter Befestigungsschritt durchgeführt wird, mit welchem das fixierte Magnetelement dauerhaft in der Aufnahmetasche befestigt wird.

Eine Grundidee der Erfindung kann darin gesehen werden, das Befestigen eines Magnetelementes in einem Blechpaket auf zwei Befestigungsschritte aufzuteilen. Dabei ist ein erster Befestigungsschritt vorgesehen, mit welchem ein eingesetztes Magnetelement zunächst fixiert und damit lagegesichert wird. Dies wird in effizienter und einfacher Weise dadurch erzielt, dass mittels eines Prägestempels an einer Außenseite des Blechpakets nahe zu der Aufnahmetasche eine oder mehrere Einprägungen eingeformt oder eingedrückt werden. Eine Einprägung stellt eine Einformung in der Oberfläche dar, welche zu einer Materialverdrängung in der Blechlamelle führt. Diese Materialverdrängung führt zu einer Materialausformung oder zu einem Materialvorsprung im Bereich der Aufnahmetasche, wodurch das Magnetelement in der Aufnahmetasche fixiert wird. Das Einprägen kann vor einem Einsetzen des Magnetelements oder vorzugsweise nach dem Einsetzen des mindestens einen Magnetelementes in die Aufnahmetasche erfolgen.

In einem zweiten Befestigungsschritt kann dann das so vorfixierte Magnetelement dauerhaft in der Aufnahmetasche befestigt werden, so dass eine zuverlässige Befestigung für einen dauerhaften Betrieb in einer elektrischen Maschine erreicht wird.

Nach einer Ausführung der Erfindung ist es besonders vorteilhaft, dass das Magnetelement in dem ersten Befestigungsschritt formschlüssig und/oder reibschlüssig in der Aufnahmetasche fixiert wird. Im Falle eines Formschlusses ragt die mindestens eine Ausformung, welche durch die Materialverdrängung erzeugt wird, in einen Zugangsbereich der Aufnahmetasche hinein, so dass die Magnetelemente nach einem vorausgehenden Einsetzen durch diese mindestens eine Ausformung blockiert sind. Alternativ oder ergänzend kann die Ausformung auch unmittelbar an das Magnetelement heranreichen und auf dieses eine Kraft ausüben, so dass hierdurch das Magnetelement in dem Blechpaket kraftschlüssig fixiert ist.

Besonders materialschonend ist es nach einer Weiterbildung der Erfindung, dass die Aufnahmetasche mit einem geringfügig größeren Querschnitt ausgebildet wird als ein Querschnitt des Magnetelementes. Insbesondere kann die Aufnahmetasche mit dem Magnetelement eine Spielpassung bilden, so dass einerseits das Magnetelement leicht in die Aufnahmetasche einschiebbar ist und andererseits kein großer Spalt zwischen der Aufnahmetasche und dem Magnetelement besteht. In einem solchen Fall ist bereits eine geringfügige Materialverdrängung durch eine Einprägung ausreichend, um eine gewünschte Fixierung des Magnetelementes in der Magnettasche zu bewirken. In dem Blechpakt können mehrere Aufnahmetaschen angeordnet sein.

Eine weitere bevorzugte Ausführungsvariante der Erfindung besteht darin, dass in dem weiterenen Befestigungsschritt ein Medium, insbesondere ein Klebstoff oder eine aufgeschmolzene thermoplastische Masse, eingeleitet wird, welche zum dauerhaften Befestigen in der Aufnahmetasche aushärtet. Hierfür können ein geeigneter Industrieklebstoff oder ein geeigneter thermoplastischer Kunststoff verwendet werden. Bei einem thermoplastischen Kunststoff wird dieser in aufgeschmolzener Form in den Freiraum zwischen dem Magnetelement und einer Innenwand der Aufnahmetasche eingespritzt und kann darin durch Aushärten abkühlen. Grundsätzlich kann ein Klebstoff oder ein Thermoplast auch bereits vorher oder zusammen mit dem Magnetelement in die Aufnahmetasche eingebracht und dann thermisch aktiviert werden.

Ein besonders wirtschaftliches Verfahren ergibt sich nach einer Weiterbildung dadurch, dass zum Bilden des Blechpakets gleichgeformte Blechlamellen vorgesehen werden. Hierdurch wird eine wirtschaftliche Massenfertigung ermöglicht.

Dabei ist es besonders verteilhaft, dass die Blechlamellen durch Ausstanzen aus einem Blech gefertigt werden. Das Blech kann insbesondere ein Blechband oder eine Blechtafel sein, wobei ein einziges Stanzwerkzeug zum Einsatz kommt.

Gemäß einer Weiterbildung der Erfindung ist es vorgesehen, dass die Aufnahmetasche als ein länglicher Kanal ausgebildet wird, in welchem mehrere Magnetelemente hintereinander eingesetzt werden. Somit können auch größere Rotoren oder Statoren für elektrische Maschinen hergestellt werden. Die Aufnahmetasche kann einseitig oder beidseitig offen sein.

Besonders zweckmäßig ist es dabei, dass mindestens ein Magnetelement vor oder nach dem Einsetzen in die Aufnahmetasche magnetisiert wird. Insbesondere bei einem Magnetisieren vor dem Einsetzen in die Aufnahmetasche können Dauermagnete mit starkem Magnetfeld erzeugt werden.

Bei einer Verfahrensvariante ist es weiterhin besonders vorteilhaft, dass das Magnetisieren zwischen dem ersten Befestigungsschritt und dem zweiten Befestigungsschritt durchgeführt wird. Somit können in dem ersten Befestigungsschritt mehrere Magnetelemente ohne Effekte einer gegenseitigen magnetischen Abstoßung in eine Aufnahmetasche positionsgenau eingebracht und in dem ersten Befestigungsschritt fixiert werden. In diesem Zustand kann sodann ein zuverlässiges Magnetisieren durch eine hinlänglich bekannte Magnetisiereinrichtung erfolgen. Abschließend kann die Anordnung der Magnete in der oder den Aufnahmetaschen in dem zweiten Befestigungsschritt abschließend lagegesichert werden.

Grundsätzlich kann es ausreichend sein, dass bereits lediglich eine Einprägung in einer der Blechlamellen ausreichend ist, um einen Magnet in der Aufnahmetasche zu fixieren. Eine besonders gute Lagesicherung wird jedoch dadurch erzielt, dass mehrere Einprägungen im Bereich der Aufnahmetasche vorgenommen werden.

Die erfindungsgemäße Anordnung zum Herstellen einer Komponente einer elektrischen Maschine ist dadurch gekennzeichnet, dass eine Vorbereitungsstation vorgesehen ist, in welcher die Aufnahmetasche mittels eines Prägestempels eine Einprägung zumindest in eine außenliegende Blechlamelle nahe der Aufnahmetasche einformbar ist, wobei Material der Blechlamelle in den Bereich der Aufnahmetasche verdrängbar und hierdurch das Magnetelement in der Aufnahmetasche in seiner Lage fixierbar ist, und dass eine Befestigungsstation vorgesehen ist, mit welcher ein zweiter Befestigungsschritt durchführbar ist, bei welchem das fixierte Magnetelement dauerhaft in der Aufnahmetasche befestigbar ist.

Die erfindungsgemäße Anordnung ist insbesondere zum Durchführen eines der vorbeschriebenen oder in den Ansprüchen angegebenen Verfahrens vorgesehen. Mit der Anordnung können die zuvor beschriebenen Vorteile erreicht werden.

Eine bevorzugte Ausführungsform der erfindungsgemäßen Anordnung besteht darin, dass in der Vorbereitungsstation mindestens eine Presseneinrichtung mit dem Prägestempel angeordnet ist. Der Prägestempel kann dabei eine Prägespitze aufweisen, welche eine Vertiefung in eine Außenseite des Blechpaketes einprägt. Insbesondere kann dabei die Prägespitze von einer flachen Auflagefläche vorstehen, welche beim Einprägen an der Außenseite des Blechpaketes zur Anlage kommt. Insgesamt ist der Prägestempel so ausgebildet, dass die durch die eingeformte Vertiefung bewirkte Materialverdrängung zu einer Verschiebung von Material mindestens einer Blechlamelle in den Bereich der Aufnahmetasche bewirkt wird. Eine Blechlamelle kann dabei eine Dicke von bis zu 2 mm oder mehr aufweisen. Die Presse kann pneumatisch oder hydraulisch oder elektrisch angetrieben sein. Das Einprägen erfolgt vorzugsweise bei einem Rotor an einem Bereich der Aufnahmetasche nahe an der Drehachse, da dort eine Entlastung durch die Fliehkraft gegeben ist.

Eine weitere bevorzugte Ausführungsvariante der Erfindung kann darin gesehen werden, dass in der Befestigungsstation eine Einspritzeinrichtung zum Einspritzen eines aushärtbaren Mediums in die Aufnahmetasche angeordnet ist. An der Befestigungsstation kann auch ergänzend oder alternativ eine Aufheizeinrichtung vorgesehen sein, um einen Klebstoff oder ein noch festes, thermoplastisches Polymer, welches in die Aufnahmetasche eingebracht wurde, thermisch zu aktivieren, so dass eine formschlüssige Verbindung zwischen dem eingesetzten Magnetelement und der Wand der Aufnahmetasche gebildet wird.

Grundsätzlich kann das erfindungsgemäße Verfahren und die erfindungsgemäße Anordnung zur Herstellung entsprechender Blechpakete für unterschiedlichste Einsatzzwecke verwendet werden. Besonders bevorzugt ist es nach einer Weiterbildung der Erfindung, dass diese eine elektrische Maschine, insbesondere einen Elektromotor, einen Transformator oder einen Generator umfasst, wobei mindestens eine Komponente verbaut ist, welche mit dem erfindungsgemäßen Verfahren hergestellt ist. Die erfindungsgemäße Komponente ist grundsätzlich dadurch gekennzeichnet, dass sie ein Blechpaket mit einer Vielzahl von Blechlamellen und mindestens ein Magnetelement aufweist, welches in einer Aufnahmetasche des Blechpakets eingesetzt und darin befestigt ist. Dabei ist an einer Außenseite des Blechpaketes mindestens eine Einprägung angebracht, durch welche eine Materialverdrängung der Blechlamelle im Bereich der Aufnahmetasche bewirkt ist, so dass durch das verdrängte Material das Magnetelement in der Aufnahmetasche in seiner Lage fixiert ist und dass zusätzlich eine Befestigung des Magnetelementes in der Aufnahmetasche gegeben ist. Diese Befestigung ist in einem zweiten Befestigungsschritt erfolgt, wobei das Befestigen vorzugsweise durch ein formschlüssiges Verbinden gegeben ist. Die Komponente kann mehrere Aufnahmetaschen aufweisen, welche jeweils ein oder mehrere Magnetelemente aufnehmen können.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine Seitenansicht einer Komponente für eine elektrische Maschine;
- Fig. 2: eine Vorderansicht der Komponente von Fig. 1;
- Fig. 3: eine perspektivische Ansicht eines Magnetelementes;
- Fig. 4: eine Detailansicht einer Aufnahmetasche mit eingesetztem Magnetelement;
- Fig. 5: eine Detailansicht der Aufnahmetasche mit befestigtem Magnetelement;
- Fig. 6: eine Draufsicht auf eine erfindungsgemäße Anordnung zum Herstellen einer Komponente;
- Fig. 7: eine Seitenansicht der Anordnung von Fig. 6; und
- Fig. 8: eine seitliche Detailansicht zu der Presseneinrichtung.

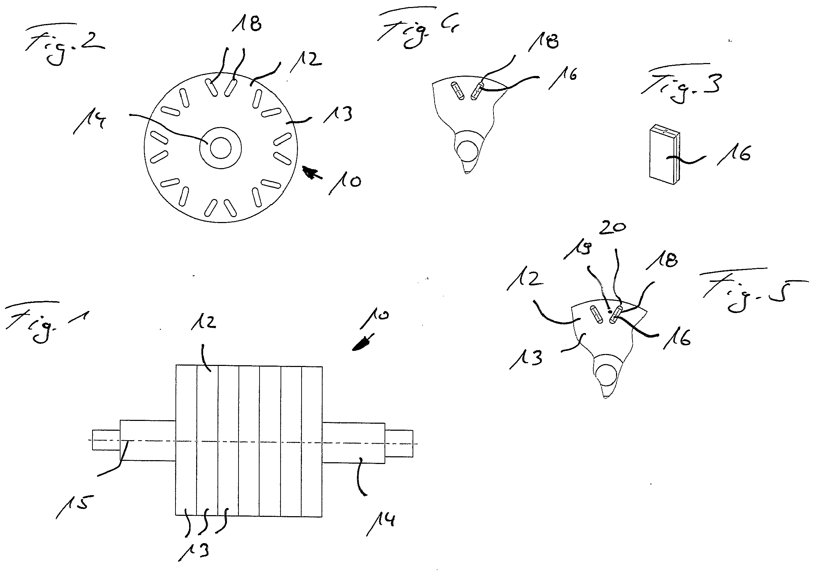

In den Figuren 1 und 2 ist eine Komponente 10 für eine elektrische Maschine dargestellt. Die Komponente 10 ist dabei als ein Rotorelement für einen Elektromotor ausgebildet, wobei eine Welle 14 vorgesehen ist, an deren Außenseite ein Blechpaket 12 aus einer Vielzahl von Blechlamellen 13 angeordnet ist. Die Blechlamellen 13 sind lediglich schematisch dargestellt und weisen typischerweise eine Dicke auf, welche geringfügig kleiner oder größer als 1 mm ist.

Entlang einer Wellenachse 15 erstrecken sich kanalartige Aufnahmetaschen 18 durch das Blechpaket 12. In diese Aufnahmetaschen 18 werden quaderförmige Magnetelemente 16 eingesetzt, von welchen beispielhaft ein Magnetelement 16 in Fig. 3 dargestellt ist. Abhängig von der axialen Länge der kanalartigen Aufnahmetaschen 18 können mehrere Magnetelemente 16 in jede Aufnahmetasche 18 sequentiell eingefügt werden, was schematisch in Fig. 4 dargestellt ist.

Abhängig von der Polung der Magnetelemente 16 können sich diese axial abstoßen, so dass sie in zuverlässiger Weise in der Aufnahmetasche 18 zu befestigen sind. Gemäß der Erfindung wird angrenzend oder nahe zu der Aufnahmetasche 18 in die außenliegende Blechlamelle 13 des Blechpaketes 12 eine Einprägung 19 eingefügt, was schematisch in Fig. 5 dargestellt ist.

Die Einprägung 19 oder Einformung bewirkt eine Materialverschiebung von Blechmaterial der obenliegenden Blechlamelle 13 in den Bereich der Aufnahmetasche 18, so dass das eingefügte Magnetelement 16 form- und/oder kraftschlüssig in der Aufnahmetasche 18 fixiert ist. Anschließend kann in den verbliebenen Freiraum der Aufnahmetasche 18 ein Medium 20, etwa ein Klebstoff oder ein aufgeschmolzener Thermoplast, eingefüllt werden, welcher darin aushärtet und so das mindestens eine Magnetelement 16 in der Aufnahmetasche 18 zusätzlich befestigt.

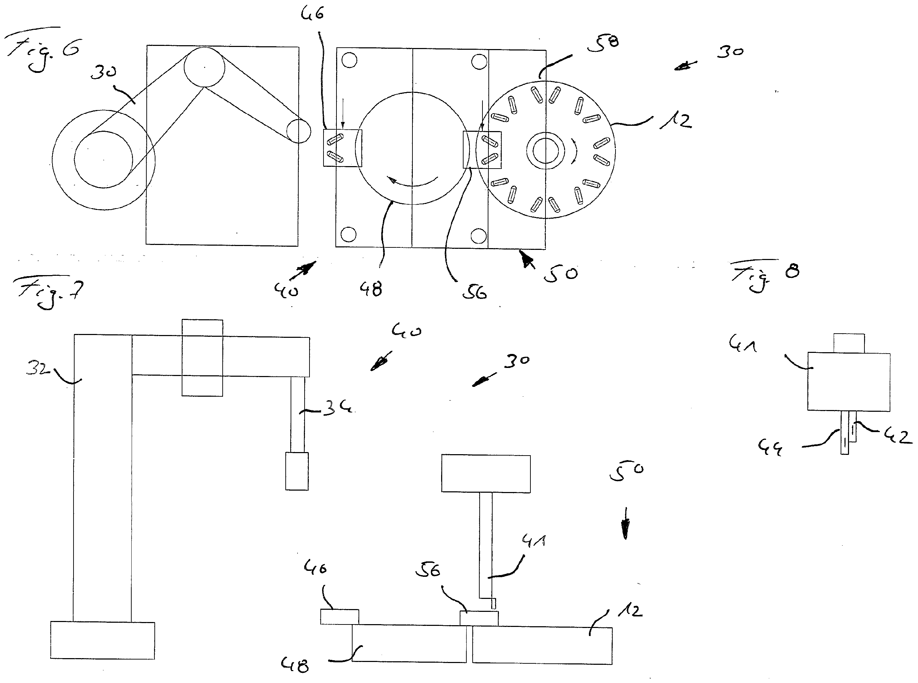

Zur Durchführung des erfindungsgemäßen Verfahrens kann eine erfindungsgemäße Anordnung 30 zum Herstellen eingesetzt werden, welche schematisch in den Figuren 6 und 7 dargestellt ist. Die Anordnung 30 weist eine erste Vorbereitungsstation 40 mit einem Roboter 32 auf, durch welchen die einzelnen Magnetelemente 16 zugeführt werden. In der Vorbereitungsstation 40 sind eine erste Drehaufnahme 48 für eine erste Fügemaske 46 und eine zweite Fügemaske 56 vorgesehen, wobei an einer Aufnahmeposition die erste Fügemaske 46 positionsgenau Magnetelemente 16 für zwei Aufnahmetaschen 18 aufnimmt. Über den Roboter 32 werden für jede Aufnahmetasche 18 in der ersten Fügemaske 46, welches auch Aufnahmenest bezeichnet werden kann, die vorgesehene Anzahl von Magnetelementen 16 aufgenommen. Hierfür kommt eine Greifeinrichtung 34 an dem Roboter 32 zum Einsatz. Die erste Drehaufnahme 48 dreht sodann um 180°, bis die erste Fügemaske 46 die Fügeposition der zweiten Fügemaske 56 über einem Blechpaket 12 einnimmt. Die zweite Fügemaske 56 dreht gleichzeitig in die Aufnahmeposition am Roboter 32.

In der Fügeposition werden die Magnetelemente 16 von oben in die Aufnahmetaschen 18 des Blechpakets 12 mittels einer Presseneinrichtung 41 eingefügt, welche schematisch in Fig. 8 näher dargestellt ist. Diese weist einen Fügestempel 44 und einen Prägestempel 42 auf. Mittels des Fügestempels 44 werden die einzelnen Magnetelemente 16 in die Aufnahmetaschen 18 eines Blechpakets 12 eingefügt. Nachdem eine Aufnahmetasche 18 befüllt ist, verbleibt der Fügestempel 44 in seiner unteren Halteposition zum Halten der eingefügten Magnetelemente 16, während anschließend der danebenliegende Prägestempel 42 nach unten verfahren wird, um die Einprägung 19 in die oberste Blechlamelle 13 des Blechpakets 12 einzufügen. So erfolgt eine erste Fixierung der Magnetelemente 16 in der Aufnahmetasche 18.

Nachdem alle Aufnahmetaschen 18 eines Blechpakets 12 mit Magnetelementen versehen sind und die Magnetelemente 16 darin fixiert sind, wird das Blechpaket 12 zu einer Befestigungsstation 50 horizontal weiterbewegt, welche in Fig. 7 nur angedeutet ist. Zum Einfüllen ist eine Einspritzvorrichtung vorgesehen, welche vertikal an oder in die Aufnahmetasche 18 fahren kann, um bei Erreichen der Aufnahmetasche 18 ein aushärtbares Medium einzuspritzen. Nach Aushärten wird hierdurch das eine oder die mehreren Magnetelemente 16 dauerhaft in der Aufnahmetasche 18 fixiert.

Durch Drehen des Blechpaketes 12 wird der Befüllvorgang an allen Aufnahmetaschen 18 wiederholt, bis alle Magnetelemente 16 in den Aufnahmetaschen 18 zusätzlich befestigt worden sind.

Die Vorbereitungsstation 40 und die Befestigungsstation 50 können auf einem gemeinsamen Maschinenbett angeordnet oder getrennt und beabstandet voneinander angeordnet sein.

## Patentansprüche

1. Verfahren zum Herstellen einer Komponente (10) einer elektrischen Maschine, wobei die Komponente ein Blechpaket (12), welches aus einer Vielzahl von Blechlamellen (13) gebildet wird, und mindestens ein Magnetelement (16) aufweist, welches in einer Aufnahmetasche (18) des Blechpakets (12) eingesetzt und darin befestigt wird,
**dadurch gekennzeichnet,**
**dass** in die Aufnahmetasche (18) mittels eines Prägestempels (42) eine Einprägung zumindest in eine außenliegende Blechlamelle (13) nahe der Aufnahmetasche (18) eingeformt wird, wobei Material der Blechlamelle (13) in den Bereich der Aufnahmetasche (18) verdrängt und hierdurch das Magnetelement (16) in der Aufnahmetasche (18) in einem ersten Befestigungsschritt in seiner Lage fixiert wird, und
**dass** anschließend ein zweiter Befestigungsschritt durchgeführt wird, mit welchem das fixierte Magnetelement (16) dauerhaft in der Aufnahmetasche (18) befestigt wird.

2. Verfahren nach Anspruch 1,
**dadurch gekennzeichnet,**
**dass** das Magnetelement (16) in dem ersten Befestigungsschritt formschlüssig und/oder reibschlüssig in der Aufnahmetasche (18) fixiert wird.

3. Verfahren nach Anspruch 1 oder 2,
**dadurch gekennzeichnet,**
**dass** die Aufnahmetasche (18) mit einem geringfügig größeren Querschnitt ausgebildet wird als ein Querschnitt des Magnetelementes (16).

4. Verfahren nach einem der Ansprüche 1 bis 3,
**dadurch gekennzeichnet,**
**dass** in dem weiterenen Befestigungsschritt ein Medium, insbesondere ein Klebstoff oder eine aufgeschmolzene thermoplastische Masse, eingeleitet wird, welche zum dauerhaften Befestigen in der Aufnahmetasche (18) aushärtet.

5. Verfahren nach einem der Ansprüche 1 bis 4,
**dadurch gekennzeichnet,**
**dass** zum Bilden des Blechpakets (12) gleichgeformte Blechlamellen (13) vorgesehen werden.

6. Verfahren nach einem der Ansprüche 1 bis 5,
**dadurch gekennzeichnet,**
**dass** die Blechlamellen (13) durch Ausstanzen aus einem Blech gefertigt werden.

7. Verfahren nach einem der Ansprüche 1 bis 6,
**dadurch gekennzeichnet,**
**dass** die Aufnahmetasche (18) als ein länglicher Kanal ausgebildet wird, in welchen mehrere Magnetelemente (16) hintereinander eingesetzt werden.

8. Verfahren nach einem der Ansprüche 1 bis 7,
**dadurch gekennzeichnet,**
**dass** das mindestens eine Magnetelement (16) vor oder nach dem Einsetzen in die Aufnahmetasche (18) magnetisiert wird.

9. Verfahren nach Anspruch 8,
**dadurch gekennzeichnet,**
**dass** das Magnetisieren zwischen dem ersten Befestigungsschritt und dem zweiten Befestigungsschritt durchgeführt wird.

10. Verfahren nach einem der Ansprüche 1 bis 9,
**dadurch gekennzeichnet,**
**dass** mehrere Einprägungen im Bereich einer Aufnahmetasche (18) vorgenommen werden.

11. Anordnung zum Herstellen einer Komponente (10) einer elektrischen Maschine, wobei die Komponente (10) ein Blechpaket (12), welches aus einer Vielzahl von Blechlamellen (13) gebildet ist, und mindestens ein Magnetelement (16) aufweist, welches in einer Aufnahmetasche (18) des Blechpakets (12) eingesetzt und darin befestigt ist,
**dadurch gekennzeichnet,**
**dass** eine Vorbereitungsstation (40) vorgesehen ist, in welcher in die Aufnahmetasche (18) mittels eines Prägestempels (42) eine Einprägung zumindest in eine außenliegende Blechlamelle (13) nahe der Aufnahmetasche (18) einformbar ist, wobei Material der Blechlamelle (13) in den Bereich der Aufnahmetasche (18) verdrängbar und hierdurch das Magnetelement (16) in der Aufnahmetasche (18) in seiner Lage fixierbar ist, und
**dass** eine Befestigungsstation (50) vorgesehen ist, mit welcher ein zweiter Befestigungsschritt durchführbar ist, bei welchem das fixierte Magnetelement (16) dauerhaft in der Aufnahmetasche (18) befestigbar ist.

12. Anordnung nach Anspruch 11,
**dadurch gekennzeichnet,**
**dass** in der Vorbereitungsstation (40) mindestens eine Presseneinrichtung (41) mit dem Prägestempel (42) angeordnet ist.

13. Anordnung nach Anspruch 11 oder 12,
**dadurch gekennzeichnet,**
**dass** in der Befestigungsstation (50) eine Einspritzeinrichtung zum Einspritzen eines aushärtbaren Mediums in die Aufnahmetasche (18) angeordnet ist.

14. Elektrische Maschine, insbesondere Elektromotor, Transformator oder Generator,
**dadurch gekennzeichnet,**
**dass** mindestens eine Komponente (10) verbaut ist, welche nach einem der Ansprüche 1 bis 10 hergestellt ist.
